(19) **Europäisches Patentamt**
**European Patent Office**
**Office européen des brevets**

(11) **EP 3 009 490 A1**

(12) **EUROPEAN PATENT APPLICATION**
published in accordance with Art. 153(4) EPC

(43) Date of publication:
**20.04.2016 Bulletin 2016/16**

(51) Int Cl.:
**C09K 5/06** *(2006.01)*

(21) Application number: **14811631.2**

(22) Date of filing: **14.04.2014**

(86) International application number:
**PCT/JP2014/060633**

(87) International publication number:
**WO 2014/199716 (18.12.2014 Gazette 2014/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.06.2013 JP 2013126161**

(71) Applicant: **JX Nippon Oil & Energy Corporation**
**Chiyoda-ku**
**Tokyo 100-8162 (JP)**

(72) Inventors:
• **YOSHIDA, Mizuho**
**Tokyo 100-8162 (JP)**
• **KOBAYASHI, Masaaki**
**Tokyo 100-8162 (JP)**
• **MORINAGA, Yoshihiro**
**Tokyo 100-8162 (JP)**
• **TSUTSUMI, Toshiyuki**
**Tokyo 100-8162 (JP)**

(74) Representative: **Müller-Boré & Partner**
**Patentanwälte PartG mbB**
**Friedenheimer Brücke 21**
**80639 München (DE)**

(54) **PARAFFIN LATENT HEAT STORAGE MATERIAL COMPOSITION AND USE OF PARAFFIN COMPOSITION AS LATENT HEAT STORAGE MATERIAL**

(57)   A paraffin-based latent heat storage material composition is provided which has a melting point close to the melting point of n-nonadecane and has a high latent heat of fusion equivalent to even-number normal paraffins. The present invention provides a paraffin-based latent heat storage material composition including n-eicosane, and n-octadecane and/or n-nonadecane. The paraffin-based latent heat storage material composition contains not less than 83% by mass of n-eicosane, not more than 13% by mass of n-octadecane, and not more than 17% by mass of n-nonadecane, and has a melting point lower than that of n-eicosane and latent heat of fusion of 230 J/g or more.

FIG.1

**Description**

Field

The present invention relates to a paraffin-based latent heat storage material composition that contains n-eicosane as a main component and undergoes a phase change. More specifically, the present invention relates to a paraffin-based latent heat storage material composition that has controlled phase transition behavior and improved latent heat storage material characteristics while having a melting point lower than the melting point of n-eicosane, by adding a particular amount of two kinds each having a carbon number adjacent to that of n-eicosane, namely, n-octadecane and/or n-nonadecane.

Background

Latent heat storage materials undergoing a phase change between liquid phase and solid phase have been used in, for example, thermal storage air conditioners, thermal storage building materials, a variety of heat reserving instruments and apparatus, and refrigerants for the purpose of effective use of energy in living environment. Methods using latent heat involved with a phase change have advantages, including that a large amount of heat can be stored in a temperature range in which a phase change occurs, the heat storage material volume can be reduced, and heat loss can be minimized because a large temperature difference does not occur in spite of a large amount of heat storage. A variety of latent heat storage materials have been proposed.

A typical example of the latent heat storage materials is a paraffin-based latent heat storage material. Latent heat storage materials composed of normal paraffins (hereinafter may be referred to as n-paraffins) having the melting point and freezing point in a living temperature region (5 to 35°C) have advantages, including being derived from petroleum fractions without undergoing complicated chemical reactions, being chemically stable, and not being corrosive. n-Paraffins in a range of carbon numbers 12 to 22 have been mainly studied. In particular, studies have been focused on even-carbon-number paraffins with a high heat of fusion, which may be blended with a variety of additives in order to effectively use latent heat and to suppress a supercooling phenomenon.

n-Eicosane, which has latent heat of fusion as large as 247 J/g, has excellent characteristics as a latent heat storage material. Its melting point, however, is 37°C (literature value), which is slightly high for the use as a heat storage material. If n-eicosane is used singly as a heat storage material, significant supercooling may occur.

Patent Literature 1 discloses an n-paraffin-based heat storage material. This heat storage material is composed of a mixture of n-hexadecane and n-tetradecane and has a melting point of 9 to 17°C in blend proportions of 99:1 to 65:35 in parts by weight. Patent Literature 1 discloses that the characteristics such as the melting point and the amount of heat absorption in a predetermined temperature region can be adjusted by changing the ratio between n-hexadecane and n-tetradecane. Patent Literature 1, however, does not disclose the use of n-eicosane and the control over the latent heat of fusion.

Patent Literature 2 discloses a heat storage material composed of a mixture of normal paraffin components substantially in a range of carbon numbers 13 to 16. Patent Literature 2 discloses that the characteristics such as the freezing point and the melting point can be adjusted by blending the components in proportions of 10:90 to 90:10 by weight in an even-carbon-number paraffin mixture or an odd-carbon-number paraffin mixture. Patent Literature 2, however, does not disclose the control over the latent heat of fusion. Patent Literature 2 discloses the result of a similar study for only one example for a ternary system of even-number ($C_n$), odd-number ($C_{n+1}$), and even-number ($C_{n+2}$) components. Patent Literature 2, however, discloses neither the control over the latent heat of fusion nor the inclusion of n-eicosane.

Patent Literature 3 discloses a heat storage material composed of a gel-like substance containing an n-paraffin (composition) including one or more selected from n-hexadecane, n-pentadecane, and n-tetradecane, and a gelling agent selected from a linear low-density polyethylene with a side chain having a length equivalent to $C_8$, and other substances. Patent Literature 3, however, discloses neither the inclusion of n-eicosane nor the control over the latent heat of fusion between n-paraffin mixtures.

Patent Literature 4 discloses an n-paraffin composition composed of three components, namely, n-heptadecane, n-octadecane, and n-nonadecane. Patent Literature 4 discloses that latent heat exceeding 200 J/g can be kept with a particular blend ratio of the above-noted components. Patent Literature 4, however, does not disclose the inclusion of n-eicosane.

Patent Literature 5 discloses a paraffin-based latent heat storage material including a plurality of n-paraffins in a range of carbon numbers 16 to 20. Patent Literature 5, however, does not disclose a composition including n-eicosane as a main component and having a high amount of latent heat of fusion.

Patent Literature 6 discloses a latent heat storage material composition, which is an emulsion of an n-paraffin such as n-eicosane and water prepared by the addition of a particular surfactant. Patent Literature 6 discloses that the emulsification stability of the emulsion is high for n-eicosane alone or for a mixed system of n-eicosane and n-pentadecane. Patent Literature 6, however, never mentions that the melting point can be reduced while keeping a high latent heat of fusion, by mixing n-eicosane with another paraffin component at a particular blend ratio.

As described above, techniques are still in demand for reducing the melting point and suppressing supercooling while taking advantage of a high latent heat of fusion of n-eicosane.

The latent heat of fusion of a paraffin-based latent heat storage material composition is, in general, preferably 200 J/g or more. If the latent heat of fusion is less than 200 Jig, the effective latent heat (heat storage) is small. In this case, the paraffin-based latent heat storage material composition may fail to work sufficiently for the use in cooling and heating applications, heat or cold reserving applications for buildings, functional materials for temperature insulation between the inside and outside of the building, functional materials giving cooling sense in summer and heat reservation in winter for household products, clothing, and the like, cold storage containers, cold heat transport media, anti-freezing agents, and other applications.

Citation List

Patent Literature

Patent Literature 1: Japanese Laid-open Patent Publication No. 05-214329
Patent Literature 2: Japanese Laid-open Patent Publication No. 06-234967
Patent Literature 3: Japanese Laid-open Patent Publication No. 2006-316194
Patent Literature 4: Japanese Laid-open Patent Publication No. 2006-321949
Patent Literature 5: Japanese Laid-open Patent Publication No. 2005-307381
Patent Literature 6: Japanese Laid-open Patent Publication No. 2004-143229

Summary

Technical Problem

The present invention is made in view of the foregoing situation. An object of the present invention is to provide a paraffin-based latent heat storage material composition having controlled phase transition behavior and improved characteristics as a latent heat storage material while keeping a high latent heat of fusion equivalent to that of even-carbon-number n-paraffins.

Solution to Problem

The inventors of the present invention have conducted elaborate study for achieving the object above and found that the phase transition behavior such as the melting point and the freezing point can be controlled and the latent heat storage material characteristics can be improved while keeping a high latent heat of fusion equivalent to that of even-carbon-number n-paraffins, by adding a particular amount of two kinds of n-paraffins having adjacent carbon numbers, namely, n-paraffins having an even carbon number and/or an odd carbon number, to n-eicosane. This finding has led to completion of the present invention.

A paraffin-based latent heat storage material composition according to the present invention includes: n-eicosane, and n-octadecane and/or n-nonadecane. (1) the paraffin-based latent heat storage material composition contains not less than 83% by mass of n-eicosane, not more than 13% by mass of n-octadecane, and not more than 17% by mass of n-nonadecane; (2) the paraffin-based latent heat storage material composition has a melting point lower than a melting point of n-eicosane; and (3) the paraffin-based latent heat storage material composition has latent heat of fusion of 230 J/g or more.

In the paraffin-based latent heat storage material composition according to the present invention, when the paraffin-based latent heat storage material composition comprises n-nonadecane and n-octadecane, an n-nonadecane content and an n-octadecane content (% by mass) have a relation represented by Expression (1) below:

$$0.5 \leq [\text{n-nonadecane content}]/[\text{n-octadecane content}] \leq 10 \quad (1).$$

In the paraffin-based latent heat storage material composition according to the present invention, the paraffin-based latent heat storage material composition has a freezing point of 30°C or higher.

In the paraffin-based latent heat storage material composition according to the present invention, wherein the paraffin-based latent heat storage material composition has a difference between the melting point and the freezing point of less than 3°C.

A use of a paraffin-based composition as a latent heat storage material according to the present invention is a use of a paraffin-based composition as a latent heat storage material, the paraffin-based composition being obtained by mixing n-eicosane, and n-octadecane and/or n-nonadecane. (1) the paraffin-based composition contains not less than 83% by mass of n-eicosane, not more than 13% by mass of n-octadecane, and not more than 17% by mass of n-nonadecane; (2) the paraffin-based composition has a melting point lower than a melting point of n-eicosane; and (3) the paraffin-based composition has latent heat of fusion of 230 J/g or more.

Advantageous Effects of Invention

The paraffin-based latent heat storage material composition of the present invention has a melting point and a freezing point adjusted in a range that is suitable for a heat storage material, without the latent heat of fusion being significantly reduced as compared with n-eicosane. Since the melting point and the freezing point can be adjusted by blending a particular amount of an n-paraffin having a carbon number adjacent to that of n-eicosane, the advantageous characteristics of paraffin-based latent heat storage materials are maintained. The use of the paraffin-based composition according to the present invention as a latent heat storage material (including the use as a core material of microcapsules) enables design of a variety of heat storage equipment, heat storage containers, and heat storage materials.

Brief Description of Drawings

FIG. 1 is a diagram illustrating the composition region of a paraffin-based latent heat storage material composition of the present invention in an n-eicosane (C20), n-octadecane (C18), and n-nonadecane (C19) mixed system.
FIG. 2 is a main-part enlarged diagram of the composition region of the paraffin-based latent heat storage material composition of the present invention in the n-eicosane (C20), n-octadecane (C18), and n-nonadecane (C19) mixed system.

Description of Embodiments

<Paraffin-Based Latent Heat Storage Material Composition>

The paraffin-based latent heat storage material composition according to the present invention contains, in addition to n-eicosane (C20) as a main component, n-octadecane (C18) with an even carbon number and/or n-nonadecane (C19) with an odd carbon number, each having a carbon number adjacent to that of n-eicosane. The paraffin-based latent heat storage material composition of the present invention may contain any other chemical compound, for example, alcohols mixed when n-paraffins are produced, hydrocarbons other than n-paraffins, and n-paraffins having carbon numbers excluding C18 to 20, in a range that does not impair the effects of the present invention.

Specifically, the paraffin-based latent heat storage material composition according to the present invention is obtained by mixing n-eicosane and n-octadecane, by mixing n-eicosane and n-nonadecane, or by mixing n-eicosane, n-octadecane, and n-nonadecane.

In the present invention, when the composition is produced, as the n-paraffin, from a rectified, refined n-paraffin (C20, C19, C18) as a raw material, special consideration does not have to be given to the presence of some amount of impurities with adjacent carbon numbers contained because of limitations in the rectification process. The reason is that the functions of the latent heat storage material can be secured by the part of the composition including n-eicosane, n-nonadecane, and/or n-octadecane, in the composition obtained by the formulation defined by the present invention. This is applicable to an n-paraffin obtained through a dehydration reaction of a purified alcohol and an n-paraffin obtained through a Fischer-Tropsch (FT) synthesis reaction.

For example, these commercially available n-eicosanes contain some amount of impurities such as paraffins having adjacent carbon numbers, olefins, and alcohols. In the composition according to the present invention, n-nonadecane and n-octadecane in the impurities function as effective components of the present invention, and the other components do not significantly impair the effects of the present invention.

<n-Eicosane (C20)>

The n-eicosane content in the paraffin-based latent heat storage material composition of the present invention is not less than 83% by mass when the total of n-eicosane, n-octadecane, and n-nonadecane is set to 100% by mass. If the n-eicosane content is less than 83% by mass, latent heat of fusion of 230 J/g or more is not achieved and it is difficult to use a high latent heat of fusion. The n-eicosane content is preferably not less than 89% by mass.

<n-Octadecane (C18)>

The n-octadecane content in the paraffin-based latent heat storage material composition of the present invention is not more than 13% by mass when the total of n-eicosane, n-octadecane, and n-nonadecane is set to 100% by mass. If the n-octadecane content exceeds 13% by mass, latent heat of fusion of 230 J/g or more is not achieved and it is difficult to use a high latent heat of fusion.
When the paraffin-based latent heat storage material of the present invention is obtained by mixing n-eicosane and n-octadecane, the n-octadecane content is not less than 3% by mass. The inclusion of not less than 3% by mass of n-octadecane can decrease the melting point and increase the freezing point of the paraffin-based latent heat storage material of the present invention. The n-octadecane content is preferably not less than 4% by mass, further preferably not less than 5% by mass.

<n-Nonadecane (C19)>

The n-nonadecane content in the paraffin-based latent heat storage material composition of the present invention is not more than 17% by mass when the total of n-eicosane, n-octadecane, and n-nonadecane is set to 100% by mass. If the n-nonadecane content exceeds 17% by mass, latent heat of fusion of 230 J/g or more is not achieved and it is difficult to use a high latent heat of fusion.
When the paraffin-based latent heat storage material of the present invention is obtained by mixing n-eicosane and n-nonadecane, the n-nonadecane content is not less than 2% by mass. The inclusion of not less than 2% by mass of n-nonadecane can decrease the melting point and increase the freezing point of the paraffin-based latent heat storage material of the present invention. The n-nonadecane content is preferably not less than 3% by mass, further preferably not less than 5% by mass.

<Blend Ratio of n-Octadecane (C18) and n-Nonadecane (C19)>

When the paraffin-based latent heat storage material composition according to the present invention includes n-octadecane and n-nonadecane, the n-nonadecane content and the n-octadecane content (% by mass) preferably have the relation represented by Expression (1) below, because if so, the resultant composition has a high latent heat of fusion and is well balanced between the melting point and the freezing point. Although the reason for this is not clear, the inventors of the present invention believe that it is possibly related to the balance between the interaction between n-octadecane and n-eicosane having an even carbon number and an even carbon number, respectively, and the interaction between n-nonadecane and n-eicosane having an odd carbon number and an even carbon number, respectively.

$$0.5 \leq [\text{n-nonadecane content}]/[\text{n-octadecane content}] \leq 10 \qquad (1)$$

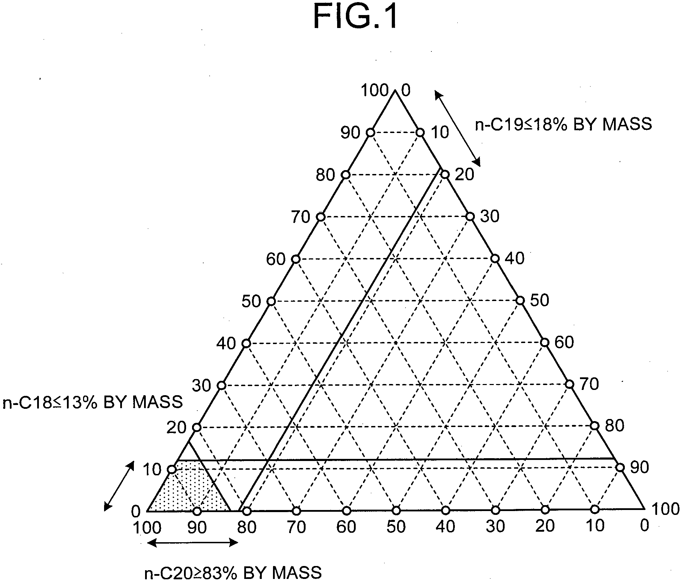

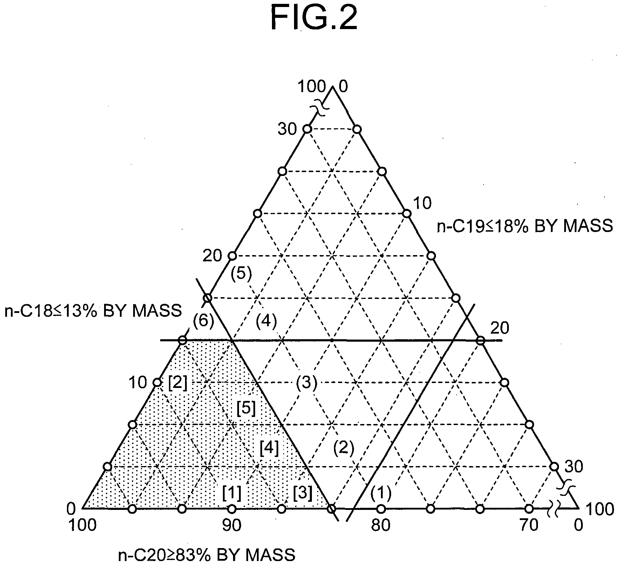

When the paraffin-based latent heat storage material composition according to the present invention is obtained by mixing n-eicosane, n-octadecane, and n-nonadecane, preferably, 83 to 98% by mass of n-eicosane, 1 to 13% by mass of n-octadecane, and 1 to 16% by mass of n-nonadecane are blended. Further preferably, 85 to 95% by mass of n-eicosane, 2 to 10% by mass of n-octadecane, and 2 to 13% by mass of n-nonadecane are blended.
The summary of the composition region in n-eicosane (C20), n-octadecane (C18), and n-nonadecane (C19) mixed system according to the present invention is represented by the shaded region in FIG. 1 in a ternary diagram. FIG. 2 is an enlarged diagram illustrating the main part in FIG. 1. The numbers in square brackets in FIG. 2 ([1] to [5]) correspond to the numbers of examples described later, and the numbers in round brackets ((1) to (6)) correspond to the numbers of comparative examples described later. Although the reason why excellent characteristics are obtained in this region is not clear, the inventors of the present invention believe that this is because of the interaction, in the phase transition process in melting and freezing, between an n-paraffin having an even carbon number and an n-paraffin having an odd carbon number that are adjacent to each other (between n-octadecane and n-nonadecane, or between n-nonadecane and n-eicosane).

The paraffin-based latent heat storage material composition of the present invention has a melting point lower than the melting point of n-eicosane. Although the optimum melting point in the actual use of the heat storage material varies with applications, a heat storage material that has a more effective melting temperature during use can be designed if the melting point is lower than the melting point of n-eicosane.

The paraffin-based latent heat storage material composition of the present invention preferably has a freezing point of 30°C or higher. With the freezing point of 30°C or higher, when the heat storage material is to be frozen, the heat storage material can be frozen without being excessively cooled more than the actual use temperature.

<Other Components>

The paraffin-based latent heat storage material composition according to the present invention may contain, in addition to the n-paraffins described above, (i) an n-paraffin having a carbon number excluding carbon numbers 18 to 20; (ii) an iso-paraffin, an olefin, a naphthene, or an aromatic compound; and (iii) a component such as an alcohol mixed when n-paraffins are produced, in a range that does not impair the object of the present invention.

Examples of substances that may be added (externally added) in producing a product using the paraffin-based latent heat storage material composition of the present invention include (i) substances such as resin monomers, polymerization agents, and surfactants for use in producing application products such as microcapsules; (ii) additives usually used, such as antioxidants and ultraviolet absorbers; and (iii) additives such as specific gravity adjusting agents, coloring agents such as pigments and dyes, aromatic substances, and gelling agents.

<Addition of Long-Chain Paraffin>

The n-paraffin composition according to the present invention is an n-paraffin-based composition in which n-eicosane (C20) is the longest chain. Preferably, the other n-paraffins present are substantially n-octadecane (C18) and/or n-nonadecane (C19). According to the study by the inventors of the present invention, when a long-chain paraffin, for example, a C21 or more long-chain paraffin is mixed with the paraffin-based latent heat storage material composition of the present invention, the interaction between the paraffin-based latent heat storage material composition of the present invention and the long-chain paraffin in a phase transition such as melting significantly reduces the latent heat of fusion of the paraffin-based latent heat storage material composition of the present invention. The C21 or more long-chain paraffins include the one having a long-chain paraffin structure such as the crystalline portion in the polymer portion of a linear polyethylene. In the use of the paraffin-based composition according to the present invention as a latent heat storage material, it is preferable to minimize the interaction with a C21 or more long-chain paraffin.

<Definition of Terms>

<Latent Heat of Fusion (Heat of Fusion)>

The latent heat of fusion (heat of fusion) in the present invention refers to the amount of latent heat involved with phase transition from solid phase to liquid phase. In the present invention, the latent heat of fusion refers to the amount of heat at the melting (endothermic) peak appearing in a DSC thermogram. When the DSC thermogram includes a plurality of peaks, the latent heat of fusion means the amount of heat at the peak (main peak) having a melting point of 28°C or higher and having the largest amount of heat. The latent heat of fusion of the paraffin-based latent heat storage material composition according to the present invention can be obtained from the melting peak in the DSC thermogram when the paraffin-based heat storage material composition cooled down to -30°C is measured, for example, using a differential scanning calorimeter (DSC7020 manufactured by Seiko Instruments Inc.) at a rate of temperature increase of 10°C/min.

<Melting Point>

The melting point in the present invention refers to the temperature of the point at which the tangent having the maximum inclination to the melting (endothermic) peak crosses the baseline in a DSC thermogram obtained when the paraffin-based heat storage material composition cooled down to -30°C is heated at a rate of temperature increase of 10°C/min, for example, using a differential scanning calorimeter (DSC7020 manufactured by Seiko Instruments Inc.). The melting point of the paraffin-based latent heat storage material composition (normal paraffin composition) can usually be represented by one point even when it is a composition including multiple components. If two or more peaks appear, the melting point is the temperature of the point at which the tangent having the maximum inclination to the peak (main peak) appearing at a temperature higher than 28°C and having the largest amount of heat crosses the baseline.

<Freezing Point>

The freezing point in the present invention refers to the temperature of the point at which the tangent having the maximum inclination to the freezing (exothermic) peak crosses the baseline in a DSC thermogram obtained when the paraffin-based heat storage material composition heated to 70°C is cooled at a rate of temperature decrease of 10°C/min, for example, using a differential scanning calorimeter (DSC7020 manufactured by Seiko Instruments Inc.). The freezing point of the paraffin-based latent heat storage material composition (normal paraffin composition) can usually be represented by one point even when it is a composition including multiple compositions. If two or more peaks appear, the freezing point is the temperature of the point at which the tangent having the maximum inclination to the peak (main peak) appearing at a temperature higher than 28°C and having the largest amount of heat crosses the baseline.

<Heat of Freezing>

The heat of freezing in the present invention is the amount of latent heat involved with phase transition from liquid phase to solid phase and refers to the amount of heat at the freezing (exothermic) peak appearing in a DSC thermogram. When the DSC thermogram includes a plurality of peaks, the heat of freezing means the amount of heat at the peak (main peak) having a freezing point of 28°C or higher and having the largest amount of heat.
The heat of freezing of the paraffin-based latent heat storage material composition according to the present invention was obtained from the freezing peak in a DSC thermogram when the paraffin-based heat storage material composition heated to 70°C was measured at a rate of temperature decrease of 10°C/min, for example, using a differential scanning calorimeter (DSC7020 manufactured by Seiko Instruments Inc.).

<Difference between Melting Point and Freezing Point>

The difference between the melting point and the freezing point refers to the value obtained by subtracting the lower one of the melting point and the freezing point from the higher one ("the higher temperature of the melting point and the freezing point" - "the lower temperature of the melting point and the freezing point").
The difference between the melting point and the freezing point, which can be appropriately selected depending on the purposes without any limitation, is preferably 5°C or less, more preferably 4°C or less, particularly preferably 3°C or less.
If the difference between the melting point and the freezing point is larger than 5°C, the operating temperature range is too broad and it may be difficult to efficiently absorb and release the latent heat in the temperature range in the intended use. The difference between the melting point and the freezing point of 4°C or less, or 3°C or less is advantageous in that absorption and release of a large amount of latent heat can be repeatedly used in a narrow temperature range.

Examples

Although the present invention will be described in more details below with examples, the present invention is not intended to be limited to the examples below.

(Examples 1 to 5 and Comparative Examples 1 to 6)

The paraffin-based latent heat storage material compositions of Examples 1 to 5 and Comparative Examples 1 to 6 were prepared by blending predetermined amounts of n-eicosane (99%-grade reagent manufactured by Sigma-Aldrich Co. LLC.), n-octadecane (GR-grade reagent manufactured by Tokyo Chemical Industry Co., Ltd.), and n-nonadecane (GR-grade reagent manufactured by Tokyo Chemical Industry Co., Ltd.). The purity of each reagent is approximately 99%, and each composition was subjected to gas chromatography analysis to identify each composition from the peak area. For each composition, the melting point, the latent heat of fusion, the freezing point, and the heat of freezing were measured. The results are listed in Table 1 and FIG. 2.
As can be understood from the results in Table 1 and FIG. 2, the compositions of the examples that satisfy the composition conditions of the present invention have a higher latent heat of fusion exceeding 230 J/g, a melting point lower than that of n-eicosane, and the degree of supercooling, that is, the difference between the melting point and the freezing point, smaller than that of n-eicosane, as compared with the compositions of the comparative examples that do not satisfy the composition conditions.

Table 1

| | Blend composition (%) [% in GC analysis = area ratio] | | | $\frac{n-C19}{n-C18}$ | Melting point (°C) | Latent heat of fusion (J/g) | Freezing point temperature (°C) | Heat of freezing (J/g) | Difference between melting point and freezing point (°C) |
|---|---|---|---|---|---|---|---|---|---|
| | n-C20 | n-C18 | n-C19 | | | | | | |
| Reference Example | 100.0 [98.3] | - | - | - | 34.0 | 227 | 29.1 | -226 | 4.9 |
| Example 1 | 90.0 [89.3] | - | 10.0 [9.6] | - | 33.1 | 251 | 34.2 | -164 | 1.1 |
| Example 2 | 90.0 [89.4] | 10.0 [9.6] | - | - | 31.2 | 236 | 33.5 | -170 | 2.3 |
| Example 3 | 85.0 [84.7] | - | 15.0 [14.2] | - | 31.8 | 246 | 33.9 | -173 | 2.1 |
| Example 4 | 85.0 [84.5] | 5.0 [3.6] | 10.0 [10.5] | 2.0 | 31.3 | 245 | 33.5 | -175 | 2.2 |
| Example 5 | 85.0 [84.9] | 7.5 [6.9] | 7.5 [7.0] | 1.0 | 33.0 | 239 | 33.4 | -175 | 0.4 |
| Comparative Example 1 | 80.0 [79.6] | - | 20.0 [19.4] | - | 33.4 | 165 | 33.7 | -182 | 0.3 |
| Comparative Example 2 | 80.0 [78.6] | 5.0 [5.0] | 15.0 [14.7] | 3.0 | 32.3 | 164 | 33.0 | -178 | 0.7 |
| Comparative Example 3 | 80.0 [79.2] | 10.0 [9.7] | 10.0 [9.8] | 1.0 | 31.7 | 167 | 33.0 | -181 | 1.3 |
| Comparative Example 4 | 80.0 [79.4] | 15.0 [14.5] | 5.0 [4.8] | 0.5 | 31.3 | 169 | 32.6 | -180 | 1.3 |
| Comparative Example 5 | 80.0 [79.4] | 20.0 [19.5] | - | - | 30.8 | 171 | 32.4 | -181 | 1.6 |
| Comparative Example 6 | 85.0 [84.6] | 15.0 [14.4] | - | - | 31.9 | 163 | 33.0 | -177 | 1.1 |

The paraffin-based latent heat storage material composition of the present invention has the melting point and the freezing point adjusted in a range that is suitable for a heat storage material, while having a high latent heat of fusion. Since the adjustment is made by blending particular amounts of n-paraffins with adjacent carbon numbers, the advantageous characteristics of paraffin-based latent heat storage materials are maintained. The use of the paraffin-based composition according to the present invention as a latent heat storage material (including the use as a core material of microcapsules) enables design of a variety of heat storage equipment, heat storage containers, and heat storage materials.

Industrial Applicability

The paraffin-based latent heat storage material composition of the present invention is suitable for a heat storage material for use in, in particular, heat or cold reservation for buildings, addition of the function of temperature insulation between the inside and outside of the building, and addition of the functions of giving cooling sense in summer and heat reservation in winter for household products and clothing.

## Claims

1. A paraffin-based latent heat storage material composition comprising: n-eicosane, and n-octadecane and/or n-nonadecane, wherein:

   (1) the paraffin-based latent heat storage material composition contains not less than 83% by mass of n-eicosane, not more than 13% by mass of n-octadecane, and not more than 17% by mass of n-nonadecane;
   (2) the paraffin-based latent heat storage material composition has a melting point lower than a melting point of n-eicosane; and
   (3) the paraffin-based latent heat storage material composition has latent heat of fusion of 230 J/g or more.

2. The paraffin-based latent heat storage material composition according to claim 1, wherein when the paraffin-based latent heat storage material composition comprises n-nonadecane and n-octadecane, an n-nonadecane content and an n-octadecane content (% by mass) have a relation represented by Expression (1) below:

$$0.5 \leq [\text{n-nonadecane content}]/[\text{n-octadecane content}] \leq 10 \quad (1).$$

3. The paraffin-based latent heat storage material composition according to claim 1 or 2, wherein the paraffin-based latent heat storage material composition has a freezing point of 30°C or higher.

4. The paraffin-based latent heat storage material composition according to any one of claims 1 to 3, wherein the paraffin-based latent heat storage material composition has a difference between the melting point and the freezing point of less than 3°C.

5. Use of a paraffin-based composition as a latent heat storage material, the paraffin-based composition being obtained by mixing n-eicosane, and n-octadecane and/or n-nonadecane, wherein

   (1) the paraffin-based composition contains not less than 83% by mass of n-eicosane, not more than 13% by mass of n-octadecane, and not more than 17% by mass of n-nonadecane;
   (2) the paraffin-based composition has a melting point lower than a melting point of n-eicosane; and
   (3) the paraffin-based composition has latent heat of fusion of 230 J/g or more.

# FIG.1

n-C19≤18% BY MASS

n-C18≤13% BY MASS

n-C20≥83% BY MASS

# FIG.2

## INTERNATIONAL SEARCH REPORT

| International application No. |
| --- |
| PCT/JP2014/060633 |

| A. CLASSIFICATION OF SUBJECT MATTER |
| --- |
| *C09K5/06*(2006.01)i |

According to International Patent Classification (IPC) or to both national classification and IPC

| B. FIELDS SEARCHED |
| --- |
| Minimum documentation searched (classification system followed by classification symbols)<br>C09K5/00-5/06 |

Documentation searched other than minimum documentation to the extent that such documents are included in the fields searched

| Jitsuyo Shinan Koho | 1922-1996 | Jitsuyo Shinan Toroku Koho | 1996-2014 |
| --- | --- | --- | --- |
| Kokai Jitsuyo Shinan Koho | 1971-2014 | Toroku Jitsuyo Shinan Koho | 1994-2014 |

Electronic data base consulted during the international search (name of data base and, where practicable, search terms used)
CAplus/REGISTRY(STN), JSTPlus/JMEDPlus/JST7580(JDreamIII), Thomson Innovation, Science Direct

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>A | Yan QUANYING, Liang CHEN, Zhang LIN, Experimental study on the thermal storage performance and preparation of paraffin mixtures used in the phase change wall, Solar Energy Materials & Solar Cells, 2008.11, Vol. 92, No.11, pages 1526-1532 | 1,3-5<br>2 |
| A | CN 102492400 A (Nanjing University), 13 June 2012 (13.06.2012), claims 1 to 2; paragraphs [0007] to [0008] (Family: none) | 1-5 |
| A | JP 2005-307381 A (Mitsubishi Paper Mills Ltd.), 04 November 2005 (04.11.2005), claims; paragraphs [0008], [0018], [0022] (Family: none) | 1-5 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>03 July, 2014 (03.07.14) | Date of mailing of the international search report<br>15 July, 2014 (15.07.14) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/060633

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-31885 A (Mitsubishi Paper Mills Ltd.), 08 February 2007 (08.02.2007), claims; paragraphs [0011], [0027] (Family: none) | 1-5 |
| A | JP 2006-321949 A (Japan Energy Corp.), 30 November 2006 (30.11.2006), claims; table 1 (Family: none) | 1-5 |
| A | JP 2004-197021 A (Osaka Gas Co., Ltd.), 15 July 2004 (15.07.2004), claims 1 to 3; paragraphs [0009] to [0011], [0027] (Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5214329 A
- JP 6234967 A
- JP 2006316194 A
- JP 2006321949 A
- JP 2005307381 A
- JP 2004143229 A